**Europäisches Patentamt**

**European Patent Office**

**Office européen des brevets**

(19)

(11) Veröffentlichungsnummer : **0 441 153 B1**

## (12) EUROPÄISCHE PATENTSCHRIFT

(45) Veröffentlichungstag der Patentschrift :
**25.05.94 Patentblatt 94/21**

(51) Int. Cl.$^5$ : **G01B 11/30**

(21) Anmeldenummer : **91100644.3**

(22) Anmeldetag : **19.01.91**

(54) Verfahren und Vorrichtung zur interferometrischen Absolutprüfung von Planflächen.

(30) Priorität : **02.02.90 DE 4003100**

(43) Veröffentlichungstag der Anmeldung :
**14.08.91 Patentblatt 91/33**

(45) Bekanntmachung des Hinweises auf die
Patenterteilung :
**25.05.94 Patentblatt 94/21**

(84) Benannte Vertragsstaaten :
**CH DE FR GB LI NL SE**

(56) Entgegenhaltungen :
**DE-A- 3 443 175**
**US-A- 4 859 061**

(73) Patentinhaber : **Firma Carl Zeiss**
**D-73446 Oberkochen (DE)**
(84) **CH DE FR LI NL SE**
Patentinhaber : **CARL-ZEISS-STIFTUNG,**
**HANDELND ALS CARL ZEISS**
**D-73446 Oberkochen (DE)**
(84) **GB**

(72) Erfinder : **Küchel, Michael, Dr.**
**Keplerstrasse 3**
**W-7082 Oberkochen (DE)**

Jouve, 18, rue Saint-Denis, 75001 PARIS

EP 0 441 153 B1

## Beschreibung

Die Erfindung betrifft ein Verfahren und eine Vorrichtung zur interferometrischen Absolutprüfung von Planflächen, bei dem die durch das Interferometer verursachten Wellenfrontstörungen ermittelt und bei der späteren Auswertung berücksichtigt werden.

Eine Anwendung interferometrischer Meßverfahren ist die hochgenaue Untersuchung von Probenoberflächen. Durch eine rechnergestützte Auswertung der Interferogramme sind Meßauflösungen senkrecht zur Probenoberfläche möglich, die besser als ca. 1:100 der verwendeten Lichtwellenlänge sind. Jedoch erlaubt die Interferometrie stets nur die Bestimmung der relativen Unterschiede zweier Probenoberflächen. Für eine Absolutprüfung, also den Vergleich einer Probenoberfläche relativ zu einer mathematischen Ebene, ist eine Kalibrierung des Interferometers erforderlich. Dazu müssen jedoch die Abweichungen einer Kalibrierungsoberfläche relativ zu einer mathematischen Ebene mit entsprechender Genauigkeit bekannt sein.

Ein bekanntes Verfahren zur Absolutprüfung von Planflächen ist von J. Schwider et.al. in Optica Acta, Band 13, Heft 2, Seite 103 - 119, 1966 und von J. Schwider in Optica Acta, Band 14, Heft 4, Seite 389 - 400, 1967 beschrieben. Es geht von dem klassischen Prüfverfahren aus, jeweils Zweier-Kombinationen von drei Planflächen in einem Fizeau-Interferometer relativ zueinander zu vermessen, wobei die Planflächen die Interferometerspiegel darstellen. Aufgrund eines auftretenden Spiegelungsproblems ist die Absolutprüfung jedoch nur entlang einer zentralen Geraden möglich. Die Autoren haben dieses Prüfverfahren dahingehend verbessert, daß eine Absolutprüfung der Planflächen relativ zu einer geeignet gewählten mathematischen Ebene sukzessiv auf beliebig vielen Mittelpunktsgeraden und auch auf einigen außerzentralen Geraden erfolgen kann. Es ist dazu nötig, die Planflächen mehrfach um ihre Flächennormale um geeignete Winkel relativ zueinander zu verdrehen und zu verschieben und nach jeder Drehung oder Verschiebung ein Interferogramm aufzunehmen und auszuwerten. Beispielsweise werden elf Interferenzaufnahmen benötigt, um die Probe auf sechs zentralen und auf neun außerzentralen Geraden zu prüfen. Dieses Verfahren erlaubt zwar die Absolutprüfung der Planflächen auf einem Netz von Geraden, jedoch liegen zwischen diesen Geraden stets Bereiche, in denen die Probenoberflächen unbekannt sind. Auch müssen stets zwei der drei Proben bei der Wellenlänge des Meßlichts transparent sein. Eine unbeabsichtigte Kippung der Planflächen bei den Drehungen oder Verschiebungen führt außerdem zu fehlerhaften Meßwerten.

Es ist schon vorgeschlagen worden, das bereits erwähnte Spiegelungsproblem dadurch zu lösen, daß insgesamt vier Planflächen unter zu Hilfenahme eines Hilfsspiegels relativ zueinander vermessen werden. Eine genauere Untersuchung zeigt jedoch, daß auch dieses Verfahren eine Absolutprüfung nur auf einzelnen Geraden ermöglicht.

Das Spiegelungsproblem tritt nicht auf, wenn für die Planflächen globale Polynomdarstellungen angesetzt werden. Unter dieser Annahme ist, wie in Optical Engineering, Band 23, Seite 379, 1984 beschrieben, eine flächenhafte Absolutprüfung der Planflächen möglich. Jedoch wirkt eine globale Polynomdarstellung als Tiefpaßfilterung, so daß ein Verlust an räumlicher Auflösung in Kauf genommen werden muß.

Ein weiteres bekanntes Verfahren zur flächenhaften Absolutprüfung von Planflächen ist der Ritchey-Common-Test, der von F.M.Küchel in Summaries of the Papers presented at the Optical Fabrication and Testing Workshop, 21. - 23. Oktober 1986, Seattle, Seite 114 - 119 beschrieben ist. Dieses Verfahren arbeitet wie das Twyman-Green-Interferometer nach dem Autokollimationsprinzip. In drei separaten Verfahrensschritten werden zunächst die vom Interferometer verursachten Wellenfrontstörungen ermittelt. In zwei weiteren Verfahrensschritten wird eine Probenoberfläche unter jeweils verschiedenen Inzidenzwinkeln in den divergenten Meßstrahlengang des Interferometers eingefügt und jeweils ein weiteres Interferogramm aufgezeichnet. Aus diesen fünf Interferogrammen lassen sich dann die Abweichungen der Probenoberfläche von einer mathematischen Ebene berechnen. Der rechnerische Aufwand ist bei dieser Auswertung jedoch sehr groß, denn das äquidistante Pixelraster der Kamera wird durch die schräge Inzidenz des divergenten Meßstrahls auf die Probenoberfläche in ein nichtäquidistantes Pixelraster abgebildet, dessen Gitterabstände auch noch vom Inzidenzwinkel abhängen. Deshalb ist eine Umrechnung zwischen den ingesamt drei verschiedenen Pixelrastern durch eine lokale Interpolation zwischen den Pixeln, die sehr zeitaufwendig ist, notwendig.

Es ist daher die Aufgabe der vorliegenden Erfindung, ein Verfahren der eingangs genannten Art zu schaffen, das eine flächenhafte Prüfung der Planflächen bei großer räumlicher Auflösung und mit geringem Rechenaufwand ermöglicht.

Diese Aufgabe wird gemäß dem kennzeichnenden Teil des ersten Anspruchs dadurch gelöst, daß gleichzeitig zwei zu prüfende Planflächen unter verschiedenen Inzidenzwinkeln in den Meßstrahlengang des Interferometers eingefügt werden, daß die von beiden Planflächen verursachten Wellenfrontstörungen ermittelt werden und daß mindestens ein Inzidenzwinkel geändert wird.

Für das erfindungsgemäße Verfahren ist es wesentlich, daß die beiden zu prüfenden Planflächen gleichzeitig in das Interferometer eingefügt werden. Dadurch bleibt die Orientierung der beiden Interferometerspiegel relativ zueinander erhalten. Da auch die Änderung eines Inzidenzwinkels die Orientierung der beiden Planflächen relativ zueinander nicht verändert, vermeidet das erfindungsgemäße Verfahren das eingangs erwähnte Spiegelungsproblem. Deshalb ist eine flächenhafte Absolutprüfung möglich.

Die Absolutprüfung findet in mindestens drei Verfahrensschritten statt: In einem ersten Verfahrensschritt wird ein Interferogramm des leeren Interferometers aufgezeichnet und aus diesem Interferogramm eine erste Phasenkarte, d.h. die Phasendifferenz zwischen dem Meßstrahl und dem Referenzstrahl, als Funktion des Ortes erstellt. In einem weiteren Verfahrensschritt werden die beiden zu prüfenden Planflächen unter verschiedenen Inzidenzwinkeln in den Meßstrahlengang des Interferometers gebracht, und eine zweite Phasenkarte erstellt. In einem dritten Verfahrensschritt wird nun mindestens ein Inzidenzwinkel geändert und eine dritte Phasenkarte erstellt. Die Reihenfolge der Verfahrensschritte spielt dabei keine Rolle.

Je nach der Wahl der Inzidenzwinkel ist es noch notwendig, ein weiteres Interferogramm aufzuzeichnen, nachdem entweder eine Planfläche parallel zur Einfallsebene in der Ebene der Planfläche verschoben ist, oder nachdem ein Inzidenzwinkel ein zweites Mal geändert ist. Aus diesem vierten Interferogramm wird dann eine vierte Phasenkarte erstellt.

Für die Erstellung der Phasenkarten sind selbst eine Vielzahl verschiedener Verfahren bekannt, auf die an dieser Stelle nicht ausführlich eingegangen zu werden braucht. Eine gute Übersicht über einen Teil dieser Verfahren sowie über deren Vor- und Nachteile ist in der Dissertation von B. Dörband, Universität Stuttgart, 1986, gegeben, auf die hiermit verwiesen sei. Je nach dem eingesetzten Verfahren können noch zusätzliche Verfahrensschritte notwendig sein. Für die Anwendung des Phase-Stepping-Verfahrens ist beispielsweise noch eine zeitliche Verschiebung der Phasenlage z.B. durch eine Verschiebung des Referenzspiegels entlang der optischen Achse erforderlich.

Wenn das Interferometer einen telezentrischen Meßstrahlengang hat, so können die Phasenwerte der ersten Phasenkarte einfach von den Phasenwerten der beiden verbleibenden Phasenkarten in jedem Meßpunkt abgezogen werden, wodurch der Einfluß des Interferometers auf diese Phasenkarten elliminiert ist. Zur weiteren Auswertung, also zur Berechnung der jeweils von einer Planfläche verursachten Wellenfrontstörungen, sind dann lediglich noch lineare Gleichungssysteme zu lösen. Dies kann in einem Rechner mit kommerzieller Software erfolgen.

Das zu lösende Gleichungssystem vereinfacht sich, wenn die Inzidenzwinkel beider Planflächen geändert werden, und wenn der Kosinus des einen Inzidenzwinkels einem ganzzahligen vielfachen des Kosinus des anderen Inzidenzwinkels entspricht. Eine lokale Interpolation zwischen den Meßpunkten ist dann nicht nötig. Dies gilt auch, wenn die Interferogramme von der Kamera nur auf einem diskreten Pixelraster aufgezeichnet werden. Die statistischen Unsicherheiten, mit denen die Wellenfrontstörungen ermittelt werden, steigen jedoch bei großen ganzzahligen Vielfachen an. Deshalb sollte das ganzzahlige Vielfache den Wert 2 haben.

Aus Symmetriegründen sollte die Änderung der Inzidenzwinkel einem Vertauschen der Inzidenzwinkel entsprechen. Dies kann dadurch geschehen, daß die beiden Planflächen selbst gegeneinander vertauscht werden. Die Wellenfrontstörungen beider Planflächen werden dann mit derselben statistischen Unsicherheit ermittelt.

Bei der Verschiebung der Planflächen sollte die Planfläche mit dem kleineren Inzidenzwinkel verschoben werden, da gerade diese Planfläche in der Regel nicht voll ausgeleuchtet wird.

Eine zweimalige Verschiebung dieser Planfläche um die Hälfte des in der Verschieberichtung ausgeleuchteten Bereiches gewährleistet, daß die Wellenfrontstörungen auch am Rand des Meßbereiches mit großer statistischer Sicherheit ermittelt werden. Erfolgt die Planprüfung auf einem diskreten Pixelraster, so sollte die Verschiebung ein ganzzahliges Vielfaches des Pixelabstandes betragen. Je nach der gewünschten Genauigkeit der Planprüfung und den Abweichungen der Planfläche von einer mathematischen Ebene, sollte das ganzzahlige Vielfache des Pixelabstandes auf mindestens 1/10 des Pixelabstandes eingehalten werden.

Wiederum empfiehlt es sich aus Symmetriegründen, nach dem Vertauschen der Inzidenzwinkel auch die zweite Planfläche zweimal, jeweils um die Hälfte des in der Verschieberichtung ausgeleuchteten Bereiches zu verschieben, so daß insgesamt sieben Interferogramme aufgenommen werden. Eine evtl. Kippung der Planflächen gegeneinander, die beispielsweise bei der Verschiebung aufgetreten ist, läßt sich dann berechnen und kann bei der Berechnung der Wellenfrontstörungen durch die Planflächen berücksichtigt werden.

Das erfindungsgemäße Verfahren ist sowohl mit einem Michelson-Interferometer als auch mit einem Fizeau-Interferometer durchführbar. Ein Fizeau-Interferometer ermöglicht jedoch eine kompaktere Bauweise.

Eine vorteilhafte Anordnung ergibt sich, wenn das Interferometer, wie üblich, auf einer Basisplatte angeordnet ist. Diese Basisplatte ist dann mit mehreren Positionierhilfen versehen, die dem Benutzer anzeigen, in welche Positionen die Planflächen und der Interferometerspiegel des Meßstrahlenganges für die einzelnen Verfahrensschritte zu bringen sind. Als einfache Positionierhilfen, die eine hohe Reproduzierbarkeit gewährleisten, können Schienen für eine Drei-Punkt-Lagerung vorgesehen sein. Der Benutzer des Interferometers ist dann jederzeit in der Lage, eine Planfläche absolut zu vermessen oder sein Interferometer zu kalibrieren, in dem er die absolut geprüfte Planfläche als Interferometerspiegel verwendet und die durch sie verursachten Wellenfrontstörungen abspeichert. Besondere Anforderungen an die Langzeitstabilität einer solchen Anordnung sind dann nicht zu stellen.

Zur Kalibrierung eines Fizeau-Interferometers ist es vorteilhaft, wenn eine der beiden Planflächen ein Streifengitter ist. Es können dann je nach dem Inzidenzwinkel unterschiedliche Reflexionskoeffizienten dieser Planfläche eingestellt werden.

Im folgenden wird die Erfindung anhand der in den Zeichnungen dargestellten Ausführungsbeispiele näher erläutert. Im einzelnen zeigen:

Fig. 1a-c     eine schematische Darstellung des Strahlengangs einer interferometrischen Anordnung zur Absolutprüfung von Planflächen während der verschiedenen Verfahrensschritte;

Fig. 1d     eine vereinfachte Detaildarstellung des Meßstrahlenganges aus Fig. 1b;

Fig. 1e     eine vereinfachte Detaildarstellung des Meßstrahlenganges aus Fig. 1c und

Fig. 2     eine schematische Aufsicht auf ein Fizeau-Interferometer zur Absolutprüfung von Planflächen.

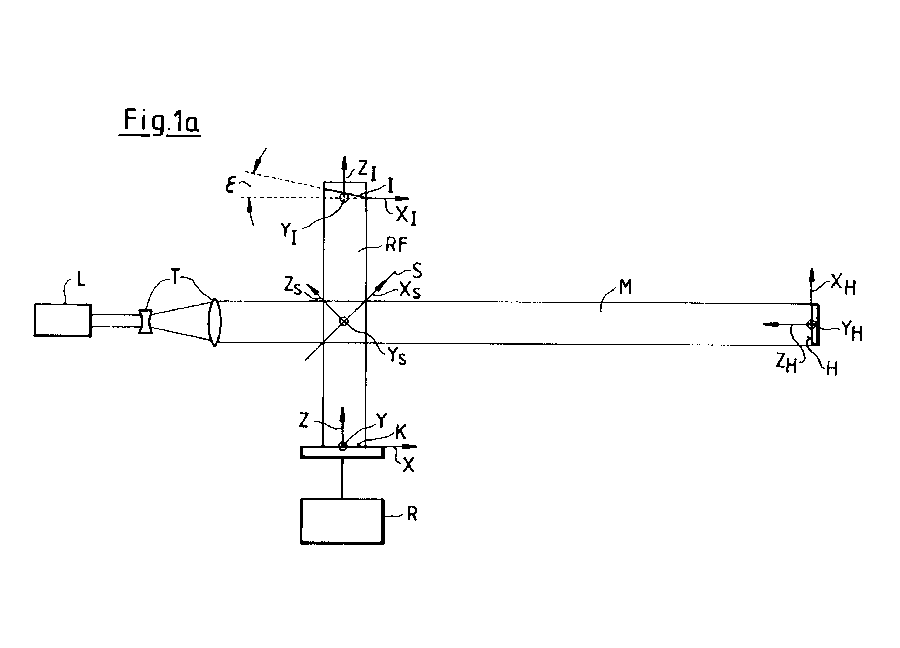

In der Fig. 1a ist schematisch der Strahlengang eines Michelson-Interferometers dargestellt. Ein mit (L) bezeichneter Laser erzeugt einen parallelen Lichtstrahl, der von einem Teleskop (T) aufgeweitet und von einem Strahlteiler (S) in einen Meßstrahlengang (M) und einen Referenzstrahlengang (RF) gelenkt wird. Ein erster Interferometerspiegel (I) reflektiert den Referenzstrahlengang (RF) und ein zweiter Interferometerspiegel (H) den Meßstrahlengang in sich selbst zurück. Beide zurückreflektierten Strahlengänge werden vom Strahlteiler (S) zum Kamerasensor (K) gelenkt. Der Kamerasensor (K) zeichnet ein räumlich aufgelöstes Bild der Interferenz des Referenzstrahles mit dem Meßstrahl, ein Interferogramm, auf.

Die optische Weglänge im Referenzstrahlengang (RF) und im Meßstrahlengang (M) sind zwar verschieden, jedoch ist die Weglängendifferenz kleiner als die Kohärenzlänge des Lasers (L).

Der Interferometerspiegel (I) im Referenzstrahlengang (RF) ist um einen kleinen Winkel ($\epsilon$), der hier jedoch vergrößert dargestellt ist, aus der senkrechten Inzidenz herausgekippt. Dadurch ist dem Interferogramm auch für den Fall, daß alle im Strahlengang angeordneten reflektierenden Flächen absolut eben sind, eine räumliche Trägerfrequenz ($f_o$) aufmoduliert. Das Interferogramm hat dann eine periodische Intensitätsverteilung.

Reale Planflächen weisen jedoch stets kleine Höhenabweichungen von einer mathematischen Ebene auf, die zu räumlichen Wellenfrontstörungen $\Phi(x,y)$ führen. Das von dem Kamerasensor (K) aufgezeichnete Interferogramm hat dann eine Intensitätsverteilung

$$I(x,y) = a(x,y) + b(x,y) \cos (2\pi f_o x + \Phi(x,y)),$$

wobei angenommen ist, daß der Kamerasensor (K) in der x,y-Ebene liegt und daß die x-Achse in der Zeichenebene liegt. Die räumliche Wellenfrontstörung $\Phi(x,y)$ wird mit dem 3-Streifen-Algorithmus, der in der oben zitierten Dissertation von B. Dörband beschrieben ist, im Rechner (R) berechnet.

In der Fig. 1a ist jeder reflektierenden Planfläche (H, I, S) jeweils ein rechtshändiges Koordinatensystem zugeordnet, deren x-Achsen in der Zeichenebene und deren z-Achsen jeweils parallel zu den Flächennormalen liegen. Die Koordinatenachsen jeder Planfläche sind mit den Bezugszeichen der jeweiligen Planfläche als Index versehen. So ist mit $(x_I, y_I, z_I)$ das Koordinatensystem des Interferometerspiegels (I) des Referenzstrahlengangs (RF), mit $(x_H, y_H, z_H)$ das Koordinatensystem des Interferometerspiegels (H) im Meßstrahlengang (M) und mit $(x_S, y_S, z_S)$ das Koordinatensystem des Strahlteilers (S) bezeichnet.

Die Wellenfrontstörung $\Phi(x, y)$ setzt sich additiv aus den Wellenfrontstörungen der einzelnen Planflächen zusammen:

$$\Phi_a (x, y) = \Phi_I (x_I, y_I) + \Phi_H (x_H, y_H) - 2 \Phi_S (x_S, y_S) \quad (1)$$

wobei vorausgesetzt ist, daß der Strahlteiler (S) nur eine einzige reflektierende Fläche aufweist.

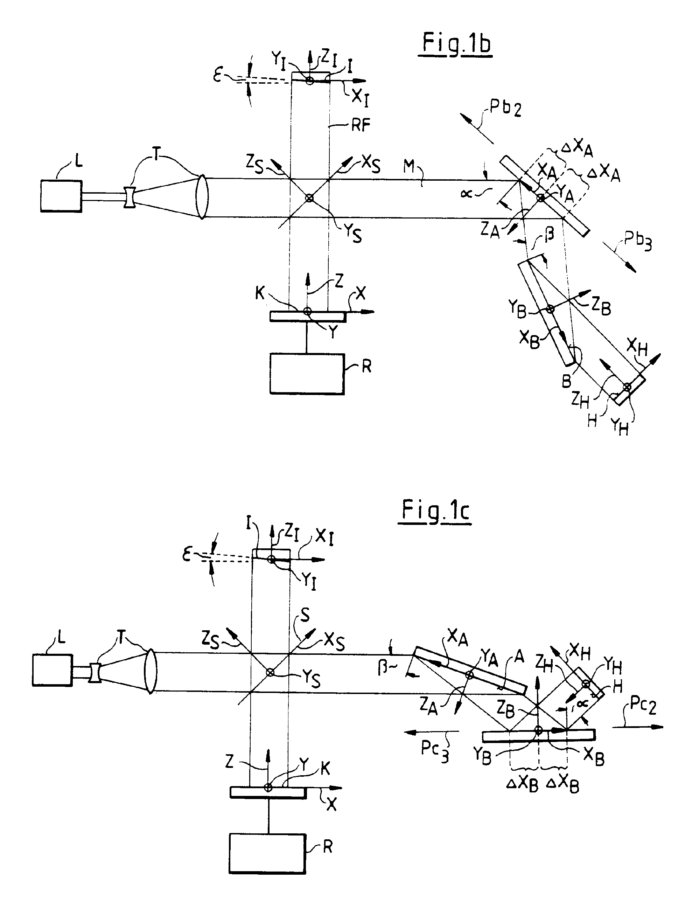

In den Fig. 1b und 1c ist im Prinzip dasselbe Michelson-Interferometer dargestellt, wie in der Fig. 1a. Deshalb sind auch identische Komponenten mit identischen Bezugszeichen wie in der Fig. 1a versehen. Im Unterschied zu der Fig. 1a sind in den Fig. 1b und 1c zwei zu prüfende Planflächen (A, B) unter verschiedenen Inzidenzwinkeln ($\alpha$. $\beta$) hintereinander im Meßstrahlengang (M) des Interferometers angeordnet. In der Fig. 1b wird der Meßstrahlengang (M) zunächst unter dem Winkel ($\alpha$) an der ersten Planfläche (A) und anschließend unter dem Winkel ($\beta$) an der zweiten Planfläche (B) reflektiert. Anschließend wird der Meßstrahlengang (M) am Interferometerspiegel (H) in sich selbst zurückreflektiert. Der Meßstrahlengang (M) hat in den Fig. 1b und 1c dieselbe Länge wie der Meßstrahlengang (M) in Fig. 1a.

In der Fig. 1c sind die beiden Planflächen (A, B) gegenüber der Fig. 1b so verdreht angeordnet, daß der Meßstrahlengang an der ersten Planfläche (A) unter dem Winkel ($\beta$) und an der zweiten Planfläche (B) unter dem Winkel ($\alpha$) reflektiert wird.

Den beiden Planflächen (A, B) sind nun ebenfalls jeweils ein rechtshändiges Koordinatensystem $(x_A, y_A, z_A)$ bzw. $(x_B, y_B, z_B)$ zugeordnet, deren z-Achsen $(z_A, z_B)$ senkrecht zur jeweiligen Planfläche und deren x-Achsen $(x_A, x_B)$ in der Zeichenebene parallel zur jeweiligen Planfläche (A, B) liegen.

Da gleichzeitig zwei Planflächen (A, B) im Meßstrahlengang eingefügt sind, sind die Interferometerspiegel (H, I) genauso orientiert wie in Fig. 1a. Ein Spiegelungsproblem tritt deshalb nicht auf.

In diesen Anordnungen werden nun weitere Interferogramme von dem Kamerasensor (K) aufgezeichnet. Es ist klar, daß die beiden Planflächen (A, B) weitere Beiträge $\Phi_A$ ($x_A$, $y_A$), $\Phi_B$ ($x_B$, $y_B$) zu der gesamten Wellenfrontstörung $\Phi(x, y)$ leisten. In der Anordnung gemäß Fig. 1b beträgt die gesamte Wellenfrontstörung

$$\Phi_{b1} (x, y) = \Phi_a (x, y)$$
$$+ 2\cos \alpha \; \Phi_A (x_A \cdot \cos \alpha, y_A) \qquad\qquad (2)$$
$$+ 2\cos \beta \; \Phi_B (-x_B \cdot \cos \beta, y_B),$$

wobei berücksichtigt ist, daß die Positionen an denen ein Lichtstrahl an den Planflächen (A, B) reflektiert wird, vom jeweiligen Einfallswinkel ($\alpha$, $\beta$) abhängen. Die Wellenfrontstörungen $\Phi_A$, $\Phi_B$ der beiden Planflächen (A, B) beschreiben die Wellenfrontstörungen, die die jeweilige Planfläche bei senkrechter Inzidenz verursachen würde. Durch die Inzidenzwinkel ($\alpha$, $\beta$) ergeben sich jeweils um den Faktor cos $\alpha$, bzw. cos $\beta$ kleinere Beiträge. Die Faktoren 2 in Gleichung (2) berücksichtigen die zweimalige Reflexion an jeder der beiden Planflächen (A, B).

Zwei weitere Interferogramme werden aufgenommen, nachdem die erste Planfläche (A) jeweils um eine Strecke $\Delta$ $x_A$, die einem ganzzahligen Vielfachen des Pixelabstandes auf der ersten Planfläche (A) in $x_A$-Richtung entspricht, in positive $x_A$-Richtung (Pfeil Pb$_2$) bzw. in negative $x_A$-Richtung (Pfeil Pb$_3$) verschoben worden ist. Die dabei gemessenen gesamten Wellenfrontstörungen sind:

$$\Phi_{b2} (x, y) = \Phi_a (x, y)$$
$$+ 2\cos \alpha \; \Phi_A ((- \Delta x_A + x_A) \cdot \cos \alpha, y_A) \qquad\qquad (3)$$
$$+ 2\cos \beta \; \Phi_B (-x_B \cdot \cos \beta, y_B)$$

nach Verschiebung in Richtung des Pfeiles (P$_{b2}$) und

$$\Phi_{b3} (x, y) = \Phi_a (x, y)$$
$$+ 2\cos \alpha \; \Phi_A ((\Delta x_A + x_A) \cdot \cos \alpha, y_A) \qquad\qquad (4)$$
$$+ 2\cos \beta \; \Phi_B (-x_B \cdot \cos \beta, y_B)$$

nach Verschiebung der Planfläche (A) in Richtung des Pfeiles (Pb$_3$).

In der Anordnung gemäß Fig. 1c werden drei weitere Interferogramme mit dem Kamerasensor (K) aufgenommen und mit dem Rechner (R) ausgewertet. Jedoch wird diesmal die zweite Planfläche (B) entlang ihrer $x_B$-Achse zwischen den Aufzeichnungen um eine Strecke $\Delta x_B$, das einem ganzzahligen Vielfachen des Pixelabstandes auf der zweiten Planfläche (B) in $x_B$-Richtung entspricht, verschoben.

Die gemessenen Wellenfrontstörungen in der Ebene des Kamerasensors (K) ergeben sich entsprechend unter Berücksichtigung der nun vertauschten Einfallswinkel:

$$\Phi_{c1} (x, y) = \Phi_a (x, y)$$
$$+ 2\cos \beta \; \Phi_A (x_A \cdot \cos \beta, y_A) \qquad\qquad (5)$$
$$+ 2\cos \alpha \; \Phi_B (-x_B \cdot \cos \alpha, y_B)$$

für den unverschobenen Fall,

$$\Phi_{c2} (x, y) = \Phi_a (x, y)$$
$$+ 2\cos \beta \; \Phi_A (x_A \cdot \cos \beta, y_A) \qquad\qquad (6)$$
$$+ 2\cos \alpha \; \Phi_B ((- \Delta x_B - x_B) \cdot \cos \alpha, y_B)$$

nach Verschiebung in Richtung des Pfeiles ($P_{c2}$) ($+ x_B$-Richtung) und

$$\Phi_{c3}(x,y) = \Phi_a(x,y)$$
$$+ 2\cos\beta\ \Phi_A\ (x_A \cdot \cos\beta,\ y_A) \qquad\qquad (7)$$
$$+ 2\cos\alpha\ ((\Delta x_B - x_B) \cdot \cos\alpha,\ y_B)$$

nach Verschiebung in Richtung des Pfeiles ($P_{c3}$) ($-x_B$-Richtung)

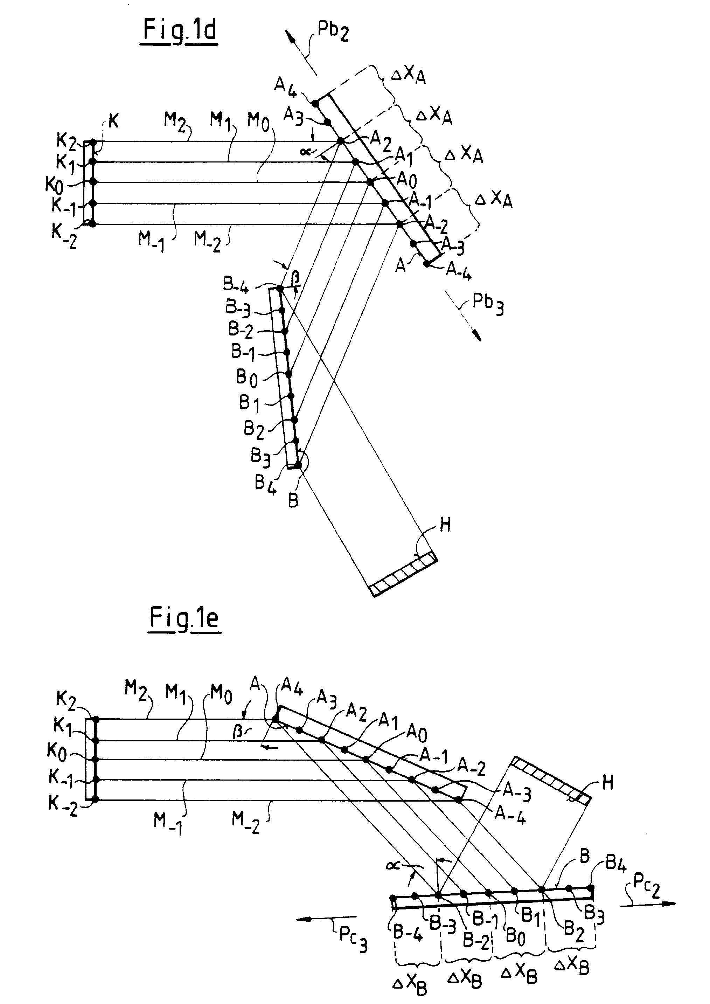

Die weitere Auswertung erfolgt durch Auflösung dieses Gleichungssystems nach den Beiträgen $\Phi_A$ und $\Phi_B$ der Wellenfrontstörungen der beiden Planflächen (A, B). Diese Auswertung vereinfacht sich durch die Wahl der Einfallswinkel ($\alpha$, $\beta$). Sie sind so gewählt, daß $\cos\alpha = 2\cos\beta$ ist. Das diskrete Pixelraster des Kamerasensors (K) wird dadurch auf diskrete Pixelraster auf den Planflächen (A, B) abgebildet, die auf beiden Planflächen und während aller Verfahrensschritte identisch sind. Dies läßt sich anschaulich anhand der Detaildarstellungen in den Fig. 1d und 1e erläutern, in denen exemplarisch fünf diskrete Pixel ($K_{-2}$) bis ($K_2$) des Kamerasensors (K) in x-Richtung betrachtet werden. Wie in der Fig. 1d dargestellt, werden durch die Strahlen ($M_{-2}, M_{-1}, M_0, M_1, M_2$) die geradzahligen Pixel ($B_4, B_2, B_0, B_{-2}, B_{-4}$) der zweiten Planfläche (B) über die zentralen Pixel ($A_{-2}, A_{-1}, A_0, A_1, A_2$) der ersten Planfläche (A) Pixel für Pixel auf die Pixel ($K_{-2}, K_{-1}, K_0, K_1, K_2$) des Kamerasensors (K) abgebildet.

Nach der Verschiebung der ersten Planfläche (A) um zwei Pixel, welches der Hälfte des in $x_A$-Richtung auf dieser Planfläche (A) ausgeleuchteten Bereiches entspricht, in Richtung des Pfeiles ($Pb_2$) werden jeweils Pixel dieser Planfläche (A) mit einem um die Zahl 2 kleineren Index, d.h. die Pixel ($A_{-4}, A_{-3}, A_{-2}, A_{-1}, A_0$), auf die geradzahligen Pixel ($B_4, B_2, B_0, B_{-2}, B_{-4}$) der zweiten Planfläche (B) und auf die Pixel ($K_{-2}$ - $K_2$) des Kamerasensors (K) abgebildet. Entsprechend werden nach der Verschiebung der ersten Planfläche (A) um zwei Pixel in Richtung des Pfeiles ($Pb_3$) jeweils Pixel der ersten Planfläche (A) mit einem um die Zahl 2 größeren Index, d.h. die Pixel ($A_0, A_1, A_2, A_3, A_4$), auf dieselben geradzahligen Pixel ($B_4, B_2, B_0, B_{-2}, B_{-4}$) der zweiten Planfläche (B) und auf die Pixel ($K_{-2}$ - $K_2$) des Kamerasensors (K) abgebildet.

In der Fig. 1e ist die Abbildung der Pixel ($K_{-2}, K_{-1}, K_0, K_1, K_2$) des Kamerasensors (K) dargestellt, wenn die Einfallswinkel ($\alpha$, $\beta$) der beiden Planflächen (A, B) gegeneinander vertauscht sind. Es werden dann nur die geradzahligen Pixel ($A_{-4}, A_{-2}, A_0, A_2, A_4$) der ersten Planfläche (A) abgebildet.

Wesentlich ist, daß den beiden Planflächen (A, B) ein eindeutiges, diskretes Pixelraster ($A_{-4}$ - $A_4$) bzw. ($B_{-4}$ - $B_4$) zugeordnet werden kann, und daß bei der Aufnahme der Interferogramme stets Punkte dieser Pixelraster aufeinander und auf die Pixel ($K_{-2}$ - $K_2$) des Kamersensors (K) abgebildet werden. Eine Interpolation zwischen den Pixeln ist nicht nötig.

Das aus den oben angegebenen sieben Gleichungen (Gleichung (1) - (7)) bestehende Gleichungssystem kann in der Form

$$F\ \overrightarrow{\Phi_y} = \overrightarrow{\Delta\Phi_y} \qquad\qquad (8)$$

geschrieben werden. Die Fehlermatrix (F) ist dann eine Matrix mit 4 m -2 Spalten und 6 m Zeilen, wobei m die Anzahl der Pixel des Kamerasensors (K) in x-Richtung ist. In dem Vektor $\overrightarrow{\Phi_y}$ sind die gesuchten Wellenfrontstörungen $\Phi_A$ und $\Phi_B$ der beiden Planflächen (A, B) untereinander für jeweils 2 m -1 Pixel in $x_A$- bzw. $x_B$-Richtung aufgelistet. In dem Zeilenvektor $\overrightarrow{\Delta\Phi_y}$ sind die entsprechenden Wellenfrontstörungen

$\Delta\Phi_{b1} = \Phi_{b1} - \Phi_a$, $\Delta\Phi_{b2} = \Phi_{b2} - \Phi_a$, $\Delta\Phi_{b3} = \Phi_{b3} - \Phi_a$,

$\Delta\Phi_{c1} = \Phi_{c1} - \Phi_a$, $\Delta\Phi_{c2} = \Phi_{c2} - \Phi_a$, $\Delta\Phi_{c3} = \Phi_{c3} - \Phi_a$,

für die m-Pixel des Kamerasensors (K) in x-Richtung, (insgesamt also 6 m Werte) aufgelistet. Die Werte der Vektoren $\overrightarrow{\Phi_y}$ und $\overrightarrow{\Delta\Phi_y}$ sind alle bei gleichen y-Werten zu nehmen.

Das lineare Gleichungssystem (8) ist dann für jede Spalte des Kamerasensors (K) in y-Richtung zu lösen. Bei einer handelsüblichen CCD-Kamera mit 512 x 512 Pixeln muß das Gleichungssystem 512 mal gelöst werden. Die Fehlermatrix (F) ist jedoch unabhängig von x und y und deshalb eine Konstante. Die einzelnen Koeffizienten von (F) sind entweder 0, cos $\alpha$ oder cos $\beta$.

Durch Multiplikation des Gleichungssystems (8) mit der transponierten Fehlermatrix ($F^T$) und der zu ($F^TF$) inversen Matrix ($F^TF)^{-1}$ ergibt sich als Lösung

$$\overrightarrow{\Phi_y} = (F^TF)^{-1}\,F^T\;\overrightarrow{\Delta\Phi} = G\;\overrightarrow{\Delta\Phi_y}$$

mit der Gewichtsmatrix (G).

Die konstante Gewichtsmatrix (G) ist in dem Rechner (R) abgespeichert, wodurch eine schnelle Berechnung der Wellenfrontstörungen $\Phi_A$ ($x_A$, $y_A$), $\Phi_B$ ($x_B$, $y_B$) in allen Punkten ($x_A$, $y_A$) der ersten Planfläche (A) und in allen Punkten ($x_B$, $y_B$) der zweiten Planfläche (B) möglich ist.

Aus den Wellenfrontstörungen $\Phi_A$ ($x_A$, $y_A$) in den Punkten ($x_A$, $y_A$) lassen sich dann die Abweichungen $\Delta z_A$ der ersten Planfläche (A) in $z_A$-Richtung von einer mathematischen Ebene anhand der Gleichung

$$2 \times 2\,\pi\,\Delta z_A(x_A,y_A)/\lambda = \Phi_A(x_A,y_A)$$

bei Kenntnis der Wellenlänge $\lambda$ des Lasers (L) berechnen.

Entsprechendes gilt auch für die Abweichungen $\Delta z_B(x_B,y_B)$ der zweiten Planfläche (B).

Die Quadratwurzel aus der Quadratsumme der Koeffizienten einer Zeile der Gewichtsmatrix (G) ist ein Maß für die statistische Unsicherheit, mit der die Wellenfrontstörungen ($\Phi_A$) und ($\Phi_B$) ermittelt werden. Da die Gewichtsmatrix (G) für alle Spalten des Kamerasensors (K) in y-Richtung gleich ist, ist auch die statistische Unsicherheit unabhängig vom jeweiligen y-Wert. Es läßt sich zeigen, daß die statistische Unsicherheit in der Mitte der ersten Planflächen (A) nur geringfügig größer als die Unsicherheit ist, mit der die gesamten Wellenfrontstörungen ($\Phi_{a1}$, $\Phi_{b1}$, $\Phi_{b2}$, $\Phi_{b3}$, $\Phi_{c1}$, $\Phi_{c2}$, $\Phi_{c3}$) in der Mitte der ersten Planflächen (A) behaftet sind. Am Rand des Meßbereiches in $\pm x_A$-Richtung steigt diese Unsicherheit zwar etwas an. Es läßt sich zeigen, daß die wesentlichen statistischen Fehler, durch die Unsicherheiten hervorgerufen werden, mit denen die Wellenfrontstörung $\Phi_a$ des leeren Interferometers behaftet sind. Durch mehrfache Messung der Wellenfrontstörung $\Phi_a$ lassen sich diese Fehler erheblich herabsetzen.

Es ist klar, daß aufgrund der symmetrischen Anordnung dies für die erste Planfläche (A) und die zweite Planfläche (B) gleichermaßen gilt.

Für jede Spalte des Kamerasensors (K) in y-Richtung werden anhand des oben angegebenen Gleichungssystems (8) 4 m - 2 Unbekannte für die Wellenfrontstörungen beider Planflächen (A, B) berechnet. Dafür stehen insgesamt 6 m-Gleichungen zur Verfügung, d.h. das Gleichunassystem ist überbestimmt. Andererseits ist bei der bisherigen Lösung auch eine evtl. Kippung der Planflächen (A, B) bei den Verschiebungen noch nicht berücksichtigt. Solche Kippungen würden jedoch zu fehlerhaften Meßergebnissen führen. Deshalb wird die gleiche Auswertung noch einmal durchgeführt, jedoch werden jetzt nur die Wellenfrontstörungen $\Delta\Phi_{b2}$, $\Delta\Phi_{b3}$, $\Delta\Phi_{c2}$, $\Delta\Phi_{c3}$ zur Auswertung herangezogen. Liefert diese zweite Auswertung andere Wellenfrontstörungen $\Phi_{A2}$ ($x_A$, $y_A$) oder $\Phi_{B2}$ ($x_B$, $y_B$) so haben Kippungen oder Längenänderungen des Meßstrahlenganges (M) stattgefunden. Diese lassen sich aus den Differenzen $\Phi_A(x_A,y_A)$ - $\Phi_{A2}$ ($x_A$, $y_A$) bzw. $\Phi_B$ ($x_B$, $y_B$) - $\Phi_{B2}$ ($x_B$, $y_B$) berechnen, in dem das Verschwinden dieser Differenzen bei der Berücksichtigung der geeigneten Kippungen oder Längenänderungen gefordert wird. In jeder der Gleichungen (2) - (7) kann dazu auf der linken Seite noch eine zu bestimmende Phasenfläche in Form einer Ebenengleichung $r_i\,x + s_i\,y + t_i$ hinzuaddiert sein, wobei der Index i die zur Gleichung (i) gehörige Phasenfläche kennzeichnet. Es zeigt sich, daß die Koeffizienten $s_2$, $s_5$, $t_2$ und $t_5$ frei wählbar sind, und sich dann alle übrigen Koeffizienten eindeutig berechnen lassen, wobei aus Symmetriegründen einige Koeffizienten gleich oder mit entgegengesetzten Vorzeichen betragsmäßig gleich sind.

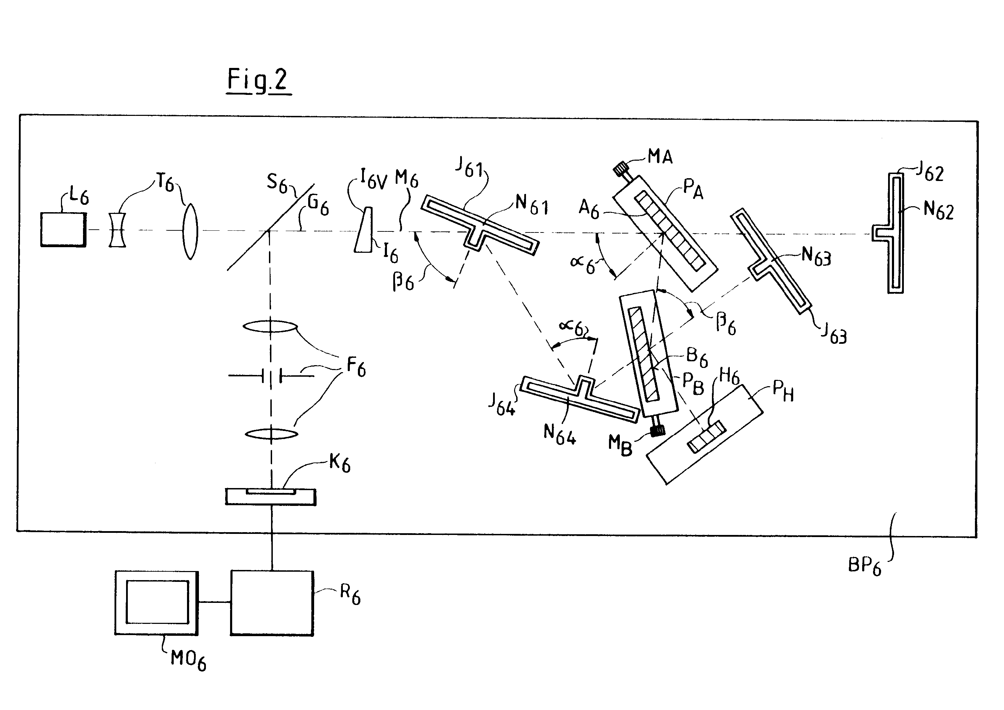

In der Fig. 2 ist ein zweites Ausführungsbeispiel zur Absolutprüfung von Planflächen dargestellt, das im wesentlichen aus einem Fizeau-Interferometer besteht. Die meisten Komponenten in diesem Ausführungsbeispiel entsprechen denen aus den Fig. 1a bis 1e. Sie sind deshalb mit den gleichen Bezugszeichen mit einem Index 6 versehen.

Im Unterschied zum Michelson-Interferometer haben der Meßstrahlengang und der Referenzstrahlengang in einem Fizeau-Interferometer einen gemeinsamen Bereich ($G_6$). Der Interferometerspiegel des Referenzstrahlenganges ($I_6$) ist teildurchlässig und keilförmig. Vor dem Kamerasensor ($K_6$) ist noch ein Raumfrequenzfilter ($F_6$) angeordnet. Das an der Vorderfläche ($I_{6V}$) des Interferometerspiegels ($I_6$) reflektierte Licht wird dadurch herausgefiltert.

Das Meßverfahren ist analog zu dem bei der Beschreibung der Fig. 1a bis 1e beschriebenen. Die Topographie der Planflächen ($A_6$, $B_6$) kann nach der Planprüfung und nach der Auswertung durch den Rechner ($R_6$) auf einem Monitor ($MO_6$) graphisch dargestellt werden.

In der Darstellung nach Fig. 2 ist die erste Planfläche ($A_6$) unter dem Inzidenzwinkel ($\alpha_6$) und die zweite Planfläche ($B_6$) unter dem Inzidenzwinkel ($\beta_6$) im Meßstrahlengang ($M_6$) angeordnet. Sowohl diese beiden Planflächen ($A_6$, $B_6$) als auch der Interferometerspiegel ($H_6$) sind auf Spiegelhalter ($P_A$, $P_B$, $P_H$) befestigt.

EP 0 441 153 B1

Auf der Basisplatte (Bp$_6$) sind t-förmige Schienen (J$_{61}$, J$_{62}$, J$_{63}$, J$_{64}$) angeordnet. die Jeweils mit Nuten (N$_{61}$, N$_{62}$, N$_{63}$, N$_{64}$) versehen sind. In diese Nuten (N$_{61}$ - N$_{64}$) können nicht dargestellte Kugeln an der Unterseite der Spiegelhalter (P$_A$, P$_B$, P$_H$) eingreifen. wodurch eine Dreipunktlagerung bewirkt wird.

Entsprechende Schienen sind auch unter den Spiegelhaltern (P$_A$, P$_B$, P$_H$) in den dargestellten Positionen vorgesehen, jedoch werden sie durch die Spiegelhalter (P$_A$, P$_B$, P$_H$) verdeckt und sind deshalb nicht dargestellt.

Zum gegenseitigen Vertauschen der Inzidenzwinkel ($\alpha_6$, $\beta_6$) beider Planflächen (A$_6$, B$_6$) wird der Spiegelhalter (P$_A$) der die erste Planfläche (A$_6$) trägt, auf die Schiene (J$_{61}$) und der Spiegelhalter (P$_B$), der die zweite Planfläche (B$_6$) trägt, auf die Schiene (J$_{64}$) gesetzt. Der den Interferometerspiegel (H$_6$) tragende Spiegelhalter (P$_H$) wird auf die Schiene (J$_{63}$) gesetzt.

Zur Messung der Wellenfrontstörung des leeren Interferometers werden die beiden Planflächen (A$_6$, B$_6$) aus dem Meßstrahlengang des Interferometers entfernt und der Interferometerspiegel (H$_6$) auf die Schiene (J$_{62}$) gesetzt.

Die Spiegelhalter (P$_A$, P$_B$) der beiden Planflächen (A$_6$, B$_6$) sind Jeweils mit einer µm-Schraube (M$_A$, M$_B$) versehen, die eine Verschiebung der beiden Planflächen (A$_6$, B$_6$) in der Zeichenebene und parallel zur Jeweiligen Planfläche (A$_6$, B$_6$) ermöglicht.

Nachdem die beiden Planflächen (A$_6$, B$_6$) absolut geprüft sind, kann das Interferometer dadurch kalibriert werden, daß eine der beiden Planflächen (A$_6$, B$_6$) anstelle des Interferometerspiegels (H$_6$) in das Interferometer eingesetzt wird. Dabei tritt beim Fizeau-Interferometer jedoch das Problem auf, daß die zu prüfenden Planflächen (A$_6$, B$_6$) einerseits einen möglichst großen Reflexionskoeffizienten haben sollten, damit kontrastreiche Interferogramme aufgenommen werden können. Andererseits sollte aus demselben Grund der Interferometerspiegel (H$_6$) nur einen kleinen Reflexionskoeffizienten haben.

Dieses Problem ist jedoch dadurch lösbar, daß die zweite Planfläche (B$_6$) eine Teilung aus abwechselnd opaken und reflektierenden Streifen aufweist. Die reflektierenden Streifen sollten breiter als die opaken Streifen sein. Die Planfläche (B$_6$) wird dann zur Absolutprüfung in 0.-Beugungsordnung untersucht. Sie weist dann einen großen Reflexionskoeffizienten auf. Zur Kalibrierung des Interferometers wird sie dann so geschwenkt anstelle des Interferometerspiegels (H$_6$) im Interferometer angeordnet, daß das in die ± 1.-Beugungsordnung reflektierte Licht den Raumfrequenzfilter (F$_6$) transmittiert. Der Reflexionskoeffizient der ± 1.-Beugungsordnung ist erheblich geringer, als der Reflexionskoeffizient der 0.-Beugungsordnung.

Wellenfrontstörungen, die durch Teilungsfehler verursacht werden, können dadurch eliminiert werden, daß eine erste Messung in der + 1.-Beugungsordnung und eine zweite Messung in der - 1.-Beugungsordnung durchgeführt wird.

In den Fig. 1a - 1c und in Fig. 2 sind die Strahlengänge so dargestellt, daß für beide Planflächen (A, B, A$_6$, B$_6$) symmetrische Prüfbedingungen vorliegen. Für den Fall, daß keine symmetrischen Prüfbedingungen erwünscht sind, kann der Interferometerspiegel (H, H$_6$) möglichst nahe bei der zweiten Planfläche (B, B$_6$) angeordnet sein. Durch ein Fernrohr, das zwischen dem Strahlteiler (S, S$_6$) und dem Kamerasensor (K, K$_6$) vorzusehen ist, kann die zweite Planfläche (B, B$_6$) auf den Kamerasensor (K, K$_6$) abgebildet werden, so daß diese zweite Planfläche (B, B$_6$) mit größerer Genauigkeit geprüft werden kann.

**Patentansprüche**

1. Verfahren zur interferometrischen Absolutprüfung von Planflächen, bei dem die durch das Interferometer verursachten Wellenfrontstörungen ermittelt und bei der späteren Auswertung berücksichtigt werden, dadurch gekennzeichnet, daß gleichzeitig zwei zu prüfende, reflektierende Planflächen (A, B) unter verschiedenen Inzidenzwinkeln ($\alpha$, $\beta$) in den Meßstrahlengang des Interferometers eingefügt werden, und daß die durch Reflexion an den beiden Planflächen (A, B) verursachten Wellenfrontstörungen anhand von vor und nach einer Änderung von mindestens einem der Inzidenzwinkwl ($\alpha$) aufgenommenen Interferogrammen ermittelt werden.

2. Verfahren nach Anspruch 1, dadurch gekennzeichnet, daß mindestens eine Planfläche (A) in der Einfallsebene senkrecht zu ihrer Flächennormalen verschoben wird.

3. Verfahren nach einem der Ansprüche 1 oder 2, dadurch gekennzeichnet, daß die Inzidenzwinkel ($\alpha$, $\beta$) beider Planflächen (A, B) geändert werden.

4. Verfahren nach Anspruch 3, dadurch gekennzeichnet, daß die Inzidenzwinkel ($\alpha$, $\beta$) so gewählt sind, daß der Kosinus des einen Inzidenzwinkels ($\alpha$) der einen Planfläche (A) einem ganzzahligen Vielfachen des Kosinus des anderen Inzidenzwinkels ($\beta$) der anderen Planfläche (B) entspricht.

8

5. Verfahren nach Anspruch 4, dadurch gekennzeichnet, daß die Inzidenzwinkel ($\alpha$, $\beta$) so gewählt sind, daß der Kosinus des einen Inzidenzwinkels ($\alpha$) dem doppelten des Kosinus des anderen Inzidenzwinkels ($\beta$) entspricht.

6. Verfahren nach Anspruch 5, dadurch gekennzeichnet, daß die Änderung der Inzidenzwinkel ($\alpha$, $\beta$) einem Vertauschen beider Inzidenzwinkel ($\alpha$, $\beta$) entspricht.

7. Verfahren nach Anspruch 2, dadurch gekennzeichnet, daß die Planfläche (A) mit dem kleineren Inzidenzwinkel ($\alpha$) in der Einfallsebene verschoben wird.

8. Verfahren nach Anspruch 7, dadurch gekennzeichnet, daß die Wellenfrontstörungen der Planflächen (A, B) auf einem diskreten Punkteraster gemessen werden, und daß die Planfläche (A) mit dem kleineren Inzidenzwinkel ($\alpha$) zweimal um ein ganzzahliges Vielfaches der Pixelabstände in Verschieberichtung verschoben wird.

9. Verfahren nach Anspruch 8, dadurch gekennzeichnet, daß die Inzidenzwinkel ($\alpha$, $\beta$) beider Planflächen (A, B) gegeneinander vertauscht werden und daß die andere Planfläche (B) die nach dem Vertauschen den kleineren Inzidenzwinkel ($\alpha$) hat, ebenfalls zweimal um ein ganzzahliges Vielfaches des Pixelabstandes in Verschieberichtung verschoben wird.

10. Verfahren nach Anspruch 9, dadurch gekennzeichnet, daß ein erstes Interferogramm ohne die zu prüfenden Planflächen (A, B) aufgenommen wird, daß ein zweites Interferogramm nach dem Einfügen der beiden Planflächen (A, B) aufgenommen wird, daß nach jedem Verschieben der unter dem kleineren Inzidenzwinkel ($\alpha$) im Interferometer angeordneten Planfläche ein drittes und ein viertes Interferogramm aufgenommen wird, daß nach dem Vertauschen der Inzidenzwinkel ($\alpha$, $\beta$) beider Planflächen (A, B) ein fünftes Interferogramm und nach jedem Verschieben der nun unter dem kleineren Inzidenzwinkel ($\alpha$) im Interferometer angeordneten Planfläche (B) Jeweils ein sechstes und ein siebtes Interferogramm aufgenommen wird, daß aus den Intensitätsverteilungen der Interferogramme jeweils ein ortsaufgelöstes Bild der Phasenlage der interferierenden Lichtwellen berechnet wird, daß die Phasenlage des ersten Interferogrammes in jedem Meßpunkt von den Phasenlagen der anderen sechs Interferogramme abgezogen wird und daß in einem Rechner (R) aus den Phasenlagen ein Bild der Topographie jeder der beiden Planflächen (A, B) ermittelt wird.

11. Verfahren nach einer der Ansprüche 1 bis 10, dadurch gekennzeichnet, daß die beiden Planflächen (A, B) in dem Meßstrahlengang ($M_6$) eines Fizeau-Interferometers angeordnet sind.

12. Interferometer zur Durchführung des Verfahrens nach Anspruch 2, dadurch gekennzeichnet, daß das Interferometer auf einer Basisplatte ($BP_6$) angeordnet ist, daß auf der Basisplatte ($BP_6$) Mittel ($J_{61}$) zur Positionierung einer ersten reflektierenden Planfläche ($A_6$) im Meßstrahlengang unter zwei verschiedenen Inzidenzwinkeln ($\alpha_6$, $\beta_6$) vorgesehen sind, daß weitere Mittel ($J_{64}$) zur Positionierung einer zweiten reflektierenden Planfläche ($B_6$) in dem von der ersten Planfläche ($A_6$) jeweils durch Reflexion abgelenkten Strahlengang und Mittel ($J_{62}$, $J_{63}$) zur Positionierung des zum Meßstrahlengang ($M_6$) gehörenden Interferometerspiegels ($H_6$) in dem an der zweiten Planfläche ($B_6$) durch Reflexion abgelenkten Strahlengang vorgesehen sind, daß Mittel zur Verschiebung ($M_A$) der ersten Planfläche ($A_6$) in der Einfallsebene senkrecht zur Normalen der Planfläche ($A_6$) vorgesehen sind, daß ein Kamerasensor ($K_6$) zur Aufzeichnung der Interferogramme und daß ein Rechner ($R_6$) zur Auswertung der Interferogramme vorgesehen ist.

## Claims

1. Method for interferometric absolute testing of plane surfaces whereby the wavefront interferences caused by the interferometer are determined and taken into consideration during subsequent analysis, characterized in that two reflecting plane surfaces (A, B) to be tested are inserted in the path of measuring rays of the interferometer at the same time at different incidence angles (a, $\beta$), that wavefront interferences caused by reflection at both plane surfaces (A, B) are determined by the aid of interferograms recorded prior and after a change of at least one of the incidence angles ($\alpha$).

2. Method according to claim 1, characterized in that at least one plane surface (A) is shifted in the incidence plane perpendicular to its surface normal.

3. Method according to one of the claims 1 or 2, characterized in that the incidence angles ($\alpha$, $\beta$) of both plane surfaces (A, B) are changed.

4. Method according to claim 3, characterized in that the incidence angles (a, $\beta$) are selected in such a manner that the cosine of the one incidence angle ($\alpha$) of one plane surface (A) corresponds to an integral multiple of the cosine of the other incidence angle ($\beta$) of the other plane surface (B).

5. Method according to claim 4, characterized in that the incidence angles (a, $\beta$) are selected in such a manner that the cosine of the one incidence angle ($\alpha$) corresponds to double the cosine of the other incidence angle ($\beta$).

6. Method according to claim 5, characterized in that the change of the incidence angle ($\alpha$, $\beta$) corresponds to an interchange of both incidence angles ($\alpha$, $\beta$).

7. Method according to claim 2, characterized in that the plane surface (A) with the smaller incidence angle ($\alpha$) is shifted in the incidence plane.

8. Method according to claim 7, characterized in that the wavefront interferences of the plane surfaces (A, B) are measured on a discrete pixel grid and that the plane surface (A) with the smaller incidence angle ($\alpha$) is shifted twice by an integral multiple of the pixel pitches in shifting direction.

9. Method according to claim 8, characterized in that the incidence angles (a, $\beta$) of both plane surfaces (A, B) are interchanged and that the other plane surface (B) which has the smaller incidence angle ($\alpha$) after interchange is also shifted twice by an integral multiple of the pixel pitch in shifting direction.

10. Method according to claim 9, characterized in that a first interferogram without the plane surfaces (A, B) to be tested is recorded, that a second interferogram is recorded after inserting both plane surfaces (A, B), that, after each shifting of the plane surface arranged with the smaller incidence angle ($\alpha$) in the interferometer, a third and a fourth interferogram are recorded, that, after interchanging the incidence angles (a, $\beta$) of both plane surfaces (A, B), a fifth interferogram is recorded and that, after each shifting of the plane surface (B) which is now arranged in the interferometer with the smaller incidence angle ($\alpha$), a sixth and a seventh interferogram are recorded, that a spatially resolved image of the phase relation of the interfering light waves is computed from the intensity distributions of the interferograms, that the phase relation of the first interferogram in each measured point is deducted from the phase relation of the other six interferograms, and that a computer (R) determines from the phase relations an image showing the topography of each of the two plane surfaces (A, B).

11. Method according to one of the claims 1 to 10, characterized in that the two plane surfaces (A, B) are arranged in the measuring beam path ($M_6$) of a Fizeau interferometer.

12. Interferometer for carrying out the method in accordance with claim 2, characterized in that the interferometer is provided on a base plate ($BP_6$), that on said base plate ($BP_6$) means ($J_{61}$) are provided to position a first reflecting plane surface ($A_6$) at two different incidence angles ($a_6$, $\beta_6$) in the measuring beam path, that additional means ($J_{64}$) for positioning a second reflecting plane surface ($B_6$) are provided in the beam path deflected by reflection by the first plane surface ($A_6$) and means ($J_{62}$, $J_{63}$) for positioning the interferometer reflector ($H_6$) associated with the measuring beam path ($M_6$) are provided in the beam path deflected by reflection by the second plane surface ($B_6$), that means ($M_A$) are provided for shifting the first plane surface ($A_6$) in the incidence plane perpendicular to the normal of the plane surface ($A_6$), that a camera sensor ($K_6$) is provided for recording the interferograms, and that a computer ($R_6$) is provided for the analysis of the interferograms.

**Revendications**

1. Procédé pour le contrôle interférométrique absolu de surfaces planes, selon lequel on détermine les perturbations du front d'onde, qui sont produites par l'interféromètre, et on en tient compte lors de l'évaluation ultérieure, caractérisé en ce qu'on insère simultanément deux surfaces planes réfléchissantes (A, B) devant être contrôlées, avec différents angles d'incidence ($\alpha$, $\beta$), dans le trajet du faisceau de mesure de l'interféromètre, et qu'on détermine les perturbations du front d'onde, qui sont provoquées par réflexion sur les deux surfaces planes (A, B), sur la base d'interférogrammes enregistrés avant et après une modification d'au moins l'un ($\alpha$) des angles d'incidence.

2. Procédé selon la revendication 1, caractérisé en ce qu'on déplace au moins une surface plane (A) dans le plan d'incidence, perpendiculairement à la normale à sa surface.

3. Procédé selon l'une des revendications 1 ou 2, caractérisé en ce qu'on modifie les angles d'incidence ($\alpha$, $\beta$) des deux surfaces planes (A, B).

4. Procédé selon la revendication 3, caractérisé en ce qu'on choisit les angles d'incidence ($\alpha$, $\beta$) de telle sorte que le cosinus d'un angle d'incidence ($\alpha$) d'une surface plane (A) correspond à un multiple entier du cosinus de l'angle d'incidence ($\beta$) de l'autre face plane (B).

5. Procédé selon la revendication 4, caractérisé en ce qu'on choisit les angles d'incidence ($\alpha$, $\beta$) de telle sorte que le cosinus d'un angle d'incidence ($\alpha$) correspond au double du cosinus de l'autre angle d'incidence ($\beta$).

6. Procédé selon la revendication 5, caractérisé en ce que la modification des angles d'incidence ($\alpha$, $\beta$) correspond à une permutation des deux angles d'incidence ($\alpha$, $\beta$).

7. Procédé selon la revendication 2, caractérisé en ce qu'on déplace la surface plane (A) possédant l'angle d'incidence ($\alpha$) le plus faible, dans le plan d'incidence.

8. Procédé selon la revendication 7, caractérisé en ce qu'on mesure les perturbations du front d'onde des surfaces planes (A, B) sur un réseau discret de points, et qu'on déplace deux fois la surface plane (A) possédant l'angle d'incidence ($\alpha$) le plus faible, sur un multiple entier de la distance entre pixels, dans la direction de déplacement.

9. Procédé selon la revendication 8, caractérisé en ce qu'on permute les angles d'incidence ($\alpha$, $\beta$) des deux surfaces planes (A, B), et qu'on déplace l'autre surface plane (B), qui possède, après la permutation, l'angle d'incidence ($\alpha$) le plus faible, également deux fois sur un multiple entier de la distance entre pixels dans la direction de déplacement.

10. Procédé selon la revendication 9, caractérisé en ce qu'on enregistre un premier interférogramme sans les surfaces planes (A, B) à contrôler, qu'on enregistre un second interférogramme après l'insertion des deux surfaces planes (A, B), qu'après chaque déplacement de la surface plane, qui est disposée sous l'angle d'incidence ($\alpha$) le plus faible dans l'interféromètre, on enregistre des troisième et quatrième interférogrammes, qu'après la permutation des angles d'incidence ($\alpha$, $\beta$) des deux surfaces planes (A, B), on enregistre un cinquième interférogramme et qu'après le déplacement de la surface plane (B) alors disposée avec l'angle d'incidence ($\alpha$) le plus faible dans l'interféromètre, on enregistre respectivement des sixième et septième interférogrammes, qu'à partir des distributions d'intensité des interférogrammes, on forme respectivement une image à résolution locale de la position de phase des ondes lumineuses qui interfèrent, qu'on soustrait la position de phase du premier interférogramme en chaque point, de positions de phase des six autres interféro-grammes, et que, dans un ordinateur (R), on forme une image de la topographie de chacune des deux surfaces planes (A, B) à partir des positions de phase.

11. Procédé selon l'une des revendications 1 à 10, caractérisé en ce que les deux surfaces planes (A, B) sont disposées dans le trajet du faisceau de mesure ($M_6$) d'un interféromètre de Fizeau.

12. Interféromètre pour la mise en oeuvre du procédé selon la revendication 2, caractérisé en ce que l'interféromètre est disposé sur une plaque de base ($BP_6$), que sur la plaque de base ($BP_6$) sont prévus des moyens ($J_{61}$) servant à positionner une première surface plane réfléchissante ($A_6$) dans le trajet du faisceau de mesure, sous deux angles d'incidence différents ($\alpha_6$, $\beta_6$), que d'autres moyens ($J_{64}$) pour le positionnement d'une seconde surface plane réfléchissante ($B_6$) sont prévus dans le trajet du rayonnement dévié respectivement par réflexion par la première surface plane ($A_6$), et des moyens ($J_{62}$, $J_{63}$) servant à positionner le miroir ($H_6$) de l'interféromètre, qui fait partie du trajet du faisceau de mesure ($M_6$), sont prévus dans le trajet du faisceau, qui est dévié par réflexion sur la seconde surface plane ($B_6$), et que des moyens ($M_A$) sont prévus pour déplacer la première surface plane ($A_6$) dans le plan d'incidence perpendiculairement à la normale de la surface plane ($A_6$), qu'il est prévu un capteur ($K_6$) d'un appareil de prise de vues pour l'enregistrement des interférogrammes et qu'il est prévu un ordinateur ($R_6$) pour évaluer des interférogrammes.

Fig.1a

EP 0 441 153 B1

Fig.1b

Fig.1c

# Fig.1d

# Fig.1e

# Fig.2